# EUROPEAN PATENT APPLICATION

(11) **EP 2 151 754 A1**
(43) Date of publication of application: **10.02.2010**
(21) Application number: 08013864.7
(22) Date of filing: 01.08.2008
(51) Int. Cl.: G06F 9/44

(54) **Method and apparatus for outputting an object via a human-machine interface**

(71) Applicant: Harman Becker Automotive Systems GmbH, 76307 Karlsbad (DE)
(72) Inventor: Arwed, Richert, 72768 Reutlingen (DE)
(74) Representative: Bertsch, Florian Oliver

(57) **Abstract**

In a method and corresponding apparatus for outputting an object (92-95, 112-115) via a human-machine interface a state of the object (92-95, 112-115) to be output is determined and a digital data archive is accessed. The data archive stores information on a plurality of different representations of the object (92-95, 112-115). Information on a representation of the plurality of representations of the object (92-95, 112-115) respectively defines the representation in terms of at least one primitive object (96-102, 116, 117). Information on a representation of the object (92-95, 112-115) is retrieved based on the determined state, and the object is output in a first state (92, 93, 95) or in a second state (112, 113, 115) based on the retrieved information on the representation.

## Description

This invention relates to methods and devices for outputting an object via a human-machine interface. In particular, the invention relates to methods and devices for outputting an object in which the object may have various different states that may change, e.g., based on a triggering event, and that are output via the human-machine interface, such as an output device of a navigation device.

### Related Art

An increasing number of electronic apparatuses in various fields of applications provides optical, acoustic, tactile or other output to a user via a human-machine interface. Providing such output usually includes outputting objects, for example buttons or sliders on a display device, or voice or other sound output via a loudspeaker. Frequently, the appearance or configuration of objects that are output may change to indicate a user action, for example when a user selects a button output via a display device, or to indicate internal processes in the electronic apparatus, such as the working progress in determining a route in a navigation device. Such changing configurations of an object represent different states of the object that are to be supported by the electronic apparatus.

In order to support the outputting of various states of an object, data that correspond to the various states have to be stored in the electronic apparatus. While the various states of objects may be implemented in an instruction code executed by a processor, such a solution may be costly in terms of storage space, for it frequently requires full graphical representations of objects to be encoded in the instruction code. Further, when the various states of objects to be output are encoded in the instruction code, updates of the electronic apparatus to a new appearance or configuration of an object may require a recompilation of the instruction code and re-testing of the compiled instruction code in the electronic apparatus, which is generally costly in terms of time and money and therefore undesirable.

### Summary

Therefore, there is a need in the art for improved methods and devices for outputting an object via a human-machine interface. In particular, there is a need in the art for such methods and devices that may be implemented with reduced storage space and which facilitate updates to a new appearance or configuration of objects to be output.

According to the invention, this need is addressed by methods and devices as defined in the independent claims. The dependent claims define preferred or advantageous embodiments of the invention.

According to one aspect of the invention, a method of outputting an object via a human-machine interface is provided. The method comprises determining a state of the object to be output and accessing a digital data archive. The data archive stores information on a plurality of different representations of the object. The information on a representation of the object defines the representation in terms of at least one primitive object. In the method, information on a representation of the object is retrieved based on the determined state, and the object is output based on the retrieved information on the representation.

As the information on various representations of the object, which correspond to various states of the object, is configured such that the respective representation is specified in terms of primitive objects, it is no longer required to store full graphical representations of the object in the respective state, for example in the form of a bitmap or vector graphics. Further, as the outputting of the object is based on the information on the representation of the object stored in the data archive, the representation of the object may be readily updated by updating the data archive.

In the method, it may be determined that a further state of the object is to be output. In this case, further information on a further representation of the object may be retrieved based on the determined further state, and the object is output again based on the retrieved further information on the further representation. Thereby, the object output via the human-machine interface is updated to the further state. Outputting the object in a new state may be performed based on a triggering event. The triggering event may be a user action or an internal process in the electronic apparatus controlling or including the human-machine interface. For example, the triggering event may be a user selection of an object displayed on a display device, or a predefined stage of data processing in the electronic apparatus that controls or includes the human-machine interface.

In order to output the object, the at least one primitive object specified by the retrieved information on the representation may be output.

In the method, the retrieved information on the representation may specify the at least one primitive object not only directly, e.g., in the form of an identifier for the primitive object(s), but may also include an identifier for a second object. In this case, the method comprises retrieving second information on a representation of the second object from the digital data archive based on the identifier for the second object. In order to output the object, the second object is output based on the retrieved second information. In other words, the information on the representation of the object may define the representation not only directly in terms of primitive objects, but also by referring to a second object, for which information on a representation in terms of at least one primitive object is stored in the data archive. Thereby, storage space may be reduced further, because the information on the representation of the object does not need to specify all primitive objects by themselves, but may refer to a second object which may, in turn, be composed of several primitive objects. As the second object may be included in several objects, while the information on its representations may be stored only once, storage space requirements are reduced further.

The human-machine interface may comprise an optical output device and the object may be a graphical object. In this case, when it is determined that a further state of the object is to be output, the object in the further state may be output at essentially the same position at which the object has been output in its original state based on the information on the representation.

The data archive may be configured such that the plurality of different representations corresponds in number to a number of states of the object in the human-machine interface. Thus, the information stored in the data archive may be adapted based on the specific requirements of the electronic apparatus which controls or includes the human-machine interface.

Determination of the state of the object to be output and outputting of the object based on the retrieved information may be performed by a processor of an electronic apparatus that executes an instruction code. In this case, the data archive may be provided separately from the instruction code. For example, the instruction code may be stored in one file, while the data archive may be stored in another file.

The state of the object may be selected from a group which comprises states indicative of a manipulation of elements output via the human-machine interface, states indicative of data processing by a processor coupled to the human-machine interface, and states indicative of data processed by the processor. For example, the state of the object, and thus its appearance or configuration output via the human-machine interface, may vary depending on whether an object can be activated or not (enabled, disabled), whether and object has been activated or not (activated, deactivated), or similar. Further, the state of the object, and thus its appearance when being output via the human-machine interface, may vary depending on which part of an instruction code a processor processes, depending on a percental processing progress, or similar. Further, the state of the object, and thus its appearance when being output via the human-machine interface, may vary depending on which type of data is being processed by a processor.

The at least one primitive object may be selected from a group comprising an alphanumerical string, a bitmap image, a vector drawing, a rectangle, a polygon, or an ellipse.

According to another aspect of the invention, a data storage device is provided which stores instructions that, when executed by a processor of a data processing apparatus, direct the processor to perform the method of outputting an object according to any one of the aspects or embodiments described herein.

According to another aspect of the invention, a data processing apparatus is provided which comprises a human-machine interface, a digital data archive, and a processor coupled to the human-machine interface and the digital data archive. The digital data archive stores information on a plurality of representations of an object to be output via the human-machine interface. The information on a representation of the object respectively specifies the representation in terms of at least one primitive object. The processor is configured to determine a state of the object. The processor is coupled to the digital data archive to retrieve information on a representation of the object based on the determined state, and is coupled to the human-machine interface to output the object via the human-machine interface based on the retrieved information.

A data processing apparatus having this configuration is adapted to perform the method of outputting an object according to any one aspect or embodiment described herein. The data processing apparatus may be any electronic apparatus, system or device that interacts with a user or operator via a human-machine interface. In particular, the data processing apparatus may be a navigation device intended to be installed onboard a vehicle.

According to another aspect of the invention, a data processing method for storing data in a digital data archive is provided, the data corresponding to an object to be output via a human-machine interface. The method comprises determining whether plural representations for the object are to be supported, storing in the data archive information on a first representation of the object in terms of at least one primitive object, and storing in the data archive information on a second representation of the object in terms of at least one primitive object based on the determining. In the determining, the plural representations for the object correspond to different states of the object to be output via the human-machine interface.

By virtue of this method a data archive may be generated, which supports representations of an object that correspond to various states of the object, and which defines such representations in terms of primitive objects, thereby reducing storage space requirements.

The determination of whether plural representations for the object are to be supported may be made based on a user input.

In the method, a hierarchy of object representations may be defined. For example, the information on the first representation of the object and/or, where applicable, the information on the second representation of the object may be stored in the data archive so as to include an identifier for a further object. Said differently, a representation of an object may be defined in terms of one or several other object(s). Information on representations of this other object or these other objects in terms of at least one primitive object is then also stored in the data archive.

The methods and apparatuses according to the various aspects and embodiments of the invention may be utilized in all fields of application in which objects having plural states are to be output via a human-machine interface. It is anticipated that navigation devices to be installed in a vehicle are one field of application. However, the invention is not limited to this specific application.

### Brief Description of the Drawings

The invention will now be described in more detail with reference to the accompanying drawing.
Fig. 1 is a block diagram representation of a data processing apparatus configured to output an object via a human-machine interface.
Fig. 2 is a schematic representation of components of a data processing apparatus and of signal flows between the components.
Fig. 3 is a flow diagram representation of a method of outputting an object via a human-machine interface.
Fig. 4 is a schematic representation of a digital data archive.
Fig. 5 is a schematic representation of graphics output via an optical output device.
Fig. 6 is a flow diagram representation of steps performed in a method of outputting an object via a human-machine interface.
Fig. 7 is a flow diagram representation of steps performed in a method of outputting an object via a human-machine interface.
Fig. 8 is a block diagram representation of a data processing apparatus configured to store data in a data archive.
Fig. 9 is a block diagram representation of a data processing method for storing data in a data archive.

### Detailed Description of Preferred Embodiments

Hereinafter, exemplary embodiments of the invention will be described with reference to the drawings. It is to be understood that the invention is not limited to the specific embodiments described herein and that, unless explicitly stated otherwise, features of the various embodiments may be combined with each other.

According to embodiments of the invention, methods and apparatuses for outputting an object via a human-machine interface are provided, in which information on a representation of the object in terms of at least one primitive object is stored in a data archive. As used herein, the term "data archive" refers to any collection of data that may be accessed to retrieve information. In embodiments in which the human-machine interface is controlled by a processor which executes an instruction code, the digital data archive may be provided separately from the instruction code, e.g., in the form of a separate file. The term "object" as used herein refers to any graphical, acoustic, or tactile entity, or combination of such entities, which may be output via an output device of a human-machine interface. The term "primitive object" as used herein refers to any basic graphical, acoustic, or tactile entity, or combination of such entities, that is known to and can be interpreted by the electronic apparatus that controls or includes the human-machine interface, and which can be output by the electronic apparatus via the human-machine interface.

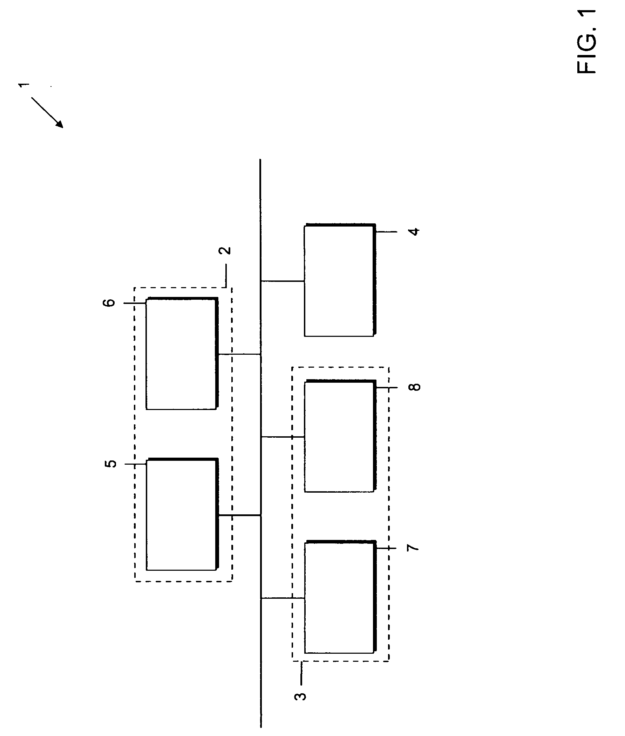

Fig. 1 is a schematic block diagram representation of a data processing apparatus 1. The apparatus 1 includes a human-machine interface 2, a storage device 3, and a processor 4 coupled to the human-machine interface 2 and the storage device 3 by a bus system. The human-machine interface 2 has an input device 5 and an output device 6. The input device 5 may be any suitable known input device, such as a keyboard, a pointer device, a touch-sensitive display, a microphone in combination with a voice recognition device or similar. The input device 5 may also be formed integrally with the output device 6. The output device 6 may be any optical, acoustic, or tactile output device, or combination of several such devices. The storage device 3, which may be a hard disk, a flash memory, a CD-ROM, a DVD or any other suitable memory, includes a section storing instruction code 7 for the processor 4 and a digital data archive 8.

In one embodiment, the data processing apparatus 1 may be configured as a navigation device for installation onboard a vehicle. The output device 6 may then be formed as a display, a projector or a loudspeaker of the navigation device. In this case, the data processing apparatus 1 may include additional componentry of a navigation device (not shown), such as a GPS receiver, a data base of road network data, and similar.

When the apparatus 1 is in use, the processor 4 retrieves instruction code 7 from the storage device 3. The instruction code directs the processor 4 to output an object via the output device 6 of the human-machine interface 2. The processor 4 is configured to output a set of primitive objects. The primitive objects may be, for example, a set of basic geometrical shapes, such as one or several of an alphanumerical string, a bitmap image, a vector drawing, a rectangle, a polygon, or an ellipse. The data archive 8 has stored therein information on a plurality of representations of the object, respectively in terms of at least one of the primitive objects. As will be described in more detail below, in order to output the object, the processor 4 accesses the data archive 8 to retrieve information on a representation of the object from the data archive 8, which specifies the representation of the object in terms of at least one primitive object. By outputting the primitive objects specified by the retrieved information, the processor 4 outputs the object via the output device 6 of the human-machine interface 2.

The apparatus 1 provides for outputting of the object in different states. Different states of an object correspond to different logical or functional parameters in the execution of the instruction code 7 by the processor 4. For illustration rather than limitation, when the object is a button displayed on an optical output device, the object may have the states "enabled" when the button is responsive to a user action, and "disabled" when the button may not be activated by a user action. Further, the button may have the states "activated" when a function corresponding to the button has been activated by a user input or in an alternative manner, or "deactivated" otherwise.

In order to support outputting of the object in different states, the processor 4 determines a state of the object that is to be output. The state may be determined based on the execution of the instruction code and/or based on a user input received at the input device 5 of the human-machine interface 2. Based on the determined state, the processor 4 selects and retrieves information on one of the plurality of representations of the object, and outputs the object by outputting the corresponding primitive object(s) specified by the retrieved information on the one representation.

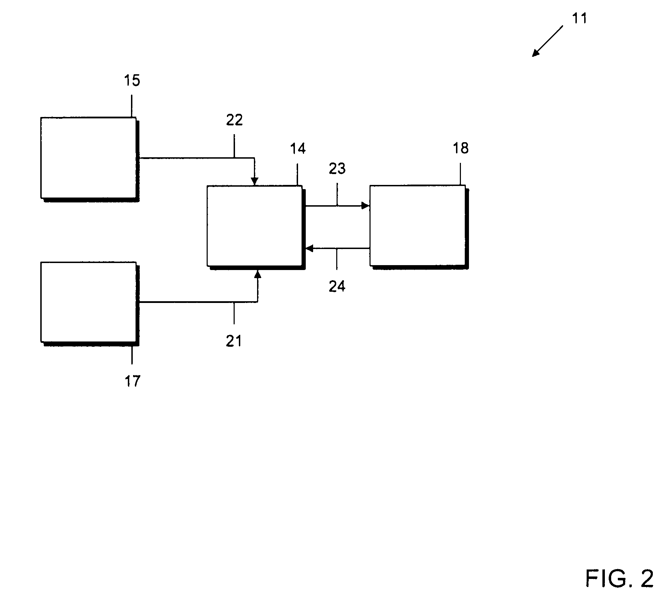

Signal flows in the apparatus of Fig. 1 will be further illustrated with reference to Fig. 2.

Fig. 2 is a schematic block diagram representation showing components of a data processing apparatus 11, which include a processor 14, an input device 15, instruction code 17, and a digital data archive 18. These components schematically illustrated in Fig. 2 may correspond to the processor 4, the input device 5, the instruction code 7, and the digital data archive 8 of Fig. 1, respectively. The processor 14 retrieves instructions 21 from the instruction code 7 in order to execute the instructions 21. The processor 14 further retrieves data 22 from the input device 15, which indicate a user input. For example, the data 22 may indicate that a user has moved a pointer device to a specific region of an optical output device or has selected an object displayed on the optical output device.

When the instructions 21 direct the processor 14 to output an object, the processor 14 determines a state of the object to be output based on the instructions 21 and/or the data 22. When the state is determined based on the instructions 21, the state may be dependent on a current logical or operational state of the processor 14 or other components of the apparatus in which the processor 14 is installed. The processor 14 then accesses the data archive 18 using a request 23 that is based, at least, on the object that is to be output and the determined state of this object. In response to the request 23, information 24 on a representation of the object that corresponds to the desired state is received from the data archive 18 at the processor 14. The information 24 on the representation of the object in the desired state defines the representation in terms of one or several primitive object(s) that are known to the processor 14. In response to receiving the information 24, the processor 14 directs an output device (not shown) of a human-machine interface to output the object in the desired state by outputting the primitive object(s) specified by the information 24. For illustration, when the output device is an optical output device, an instance of the object is created on the optical output device by creating instances of the one or several primitive object(s) specified by the information 24.

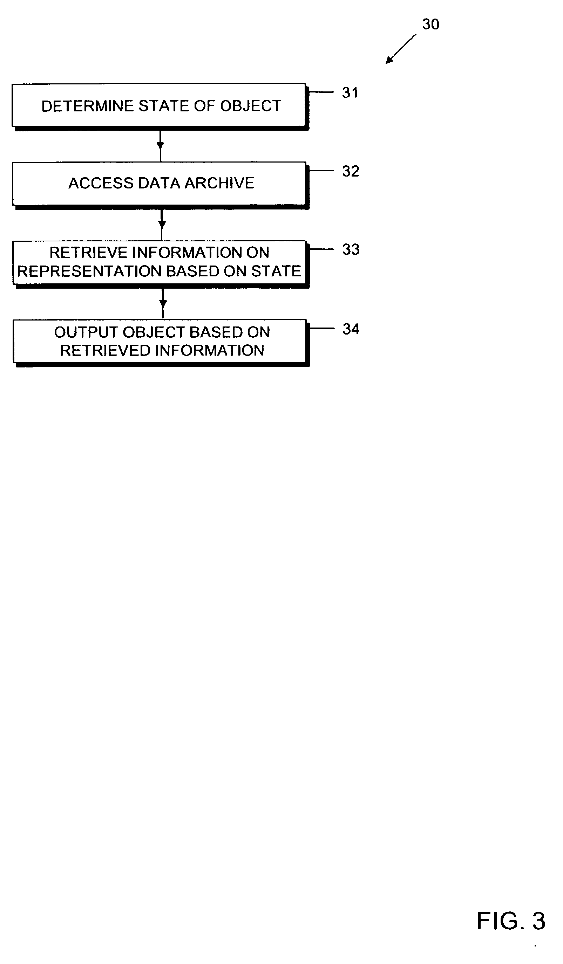

Fig. 3 is a flow diagram representation of a method 30 of outputting an object via a human-machine interface. The method may be performed by the processor 4 of the apparatus 1 of Fig. 1. At 31, a state of an object that is to be output is determined. Determining the state of the object may be based on an internal state of a data processing apparatus that controls or includes the human-machine interface and/or on a user input. At 32, a data archive is accessed, which stores information on a plurality of different representations of the object. For each of the representations, the information on the representation specifies the representation in terms of at least one primitive object. At 33, information on a representation of the plurality of representations of the object is retrieved based on the determined state of the object. Retrieving the information on the representation of the object may include selecting the information on the representation from the information corresponding to plural representations based on the state. At 34, the object is output based on the retrieved information. The outputting of the object may include outputting the primitive object(s) specified by the retrieved information.

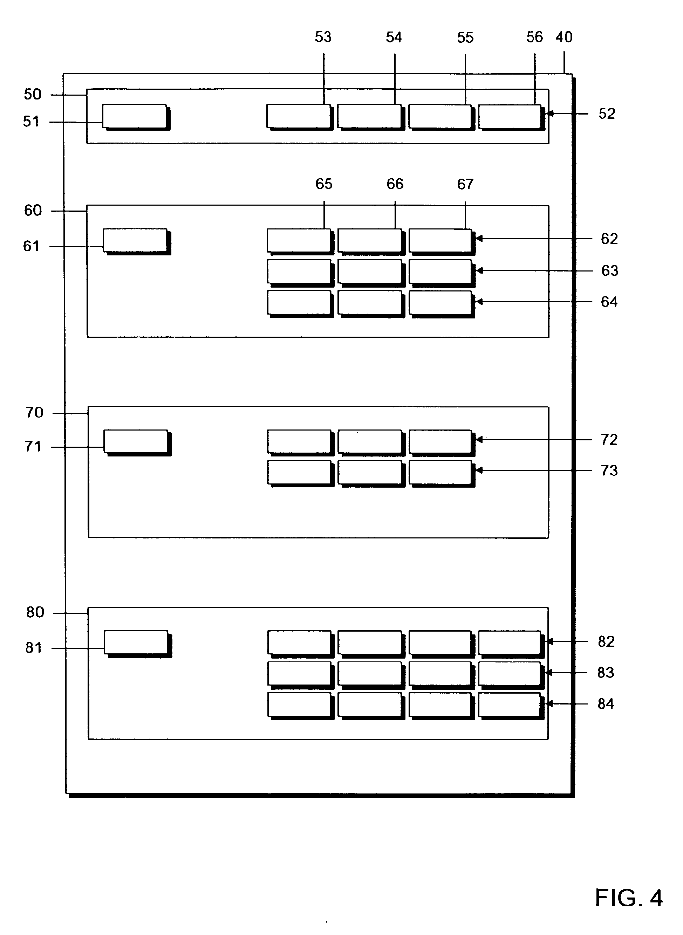

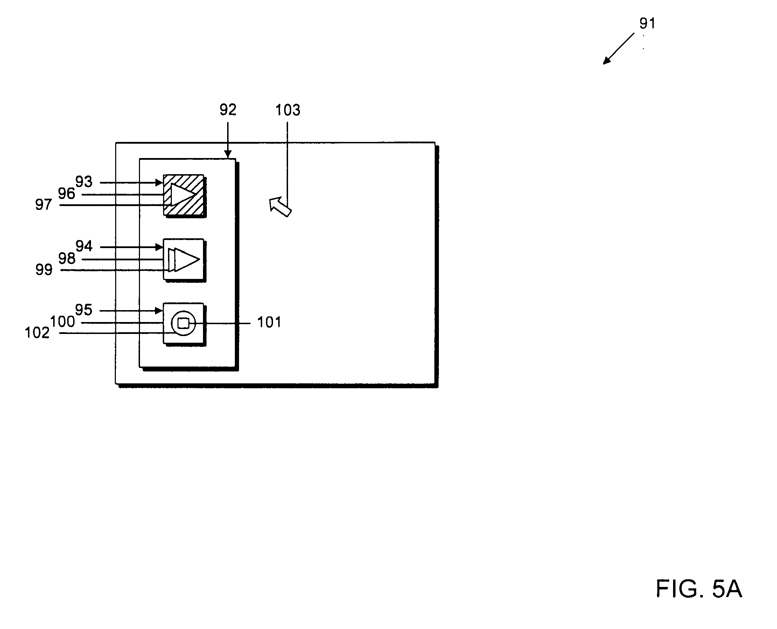

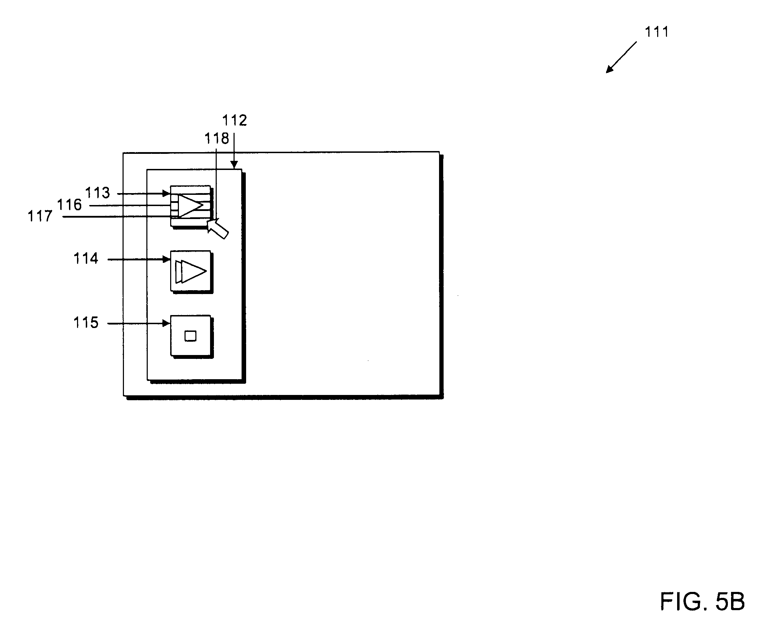

For further illustration, reference will be made to Fig. 4 and Fig. 5, which show schematic illustrations of a data archive and of graphics output via an optical output device based on data retrieved from the data archive of Fig. 4, respectively.

Fig. 4 shows a schematic illustration of a data archive 40. A structure identical or similar to the data archive 40 of Fig. 4 may be utilized to implement the data archive 8 of the apparatus 1 of Fig. 1.

The data archive 40 includes data 50, 60, 70, 80 associated with a plurality of different objects. For each of the different objects, the data 50, 60, 70, 80 include information 51, 61, 71, 81 generally specifying the object, e.g., an alphanumerical string indicating an object name and/or a numerical value indicating a number of different representations included in the data 50, 60, 70, 80.

The data 50, 60, 70, 80 further include information on one or more different representations of the respective object. The information on the one or more representations defines the respective representation of the object in terms of one or several primitive object(s). In the illustrated data archive 40, the information on the one or more representations of the object is organized in array-type structures having lines 52, 62-64, 72 and 73, and 82-84, respectively. Generally, each of the array lines may correspond to a different representation and, therefore, a different state of the object. Every line includes an identifier for the respective state of the object as well as identifiers that uniquely identify the primitive objects from which the object is constructed in the respective state. For illustration, the data 60 include information on three different representations of the object organized in array lines 62-64, respectively. Array line 62 includes data fields 65, 66 and 67. The data field 65 specifies the respective state, for example enabled, disabled, activated, or deactivated, of the object. The data field 66 provides a unique identifier for one primitive object that is included in the object in the state specified by the data field 65, and the data field 67 provides a unique identifier for another primitive object that is included in the object in the state specified by the data field 65. The other array lines 63, 64 of the data 60 as well as the array lines 72, 73 of the data 70 and the array lines 82-84 of the data 80 are constructed in an analogous manner.

As schematically indicated in the data archive 40 of Fig. 4, the number of different representations supported for each object may vary from one object to another. For example, the data 60 and the data 80 include information corresponding to three different representations of the respective objects, while the data 70 include information corresponding to two different representations of the respective object.

As also schematically indicated in the data archive 40 in Fig. 4, the number of primitive objects from which an object is constructed may vary from one object to another. For example, the array lines 62-64 of the data 60 and the array lines 72 and 73 of the data 70 respectively define representations of the corresponding object states in terms of two primitive objects, while the array lines 82-84 of the data 80 respectively define representations of the corresponding object states in terms of three primitive objects. The number of primitive objects from which an object is constructed in various states could also be made to vary from one state to another. This could be implemented by leaving entries empty in one or several of the array lines, or by defining a primitive object that does not produce any output and writing an identifier for this primitive object into the respective data fields of the array lines.

In the array lines 62-64, 72 and 73, and 82-84, an order of identifiers for the primitive objects may correspond to an order in which the primitive objects are output. When the objects are graphical objects, the order in which the identifiers for the primitive objects are arranged in the data fields of the array lines 62-64, 72 and 73, and 82-84 may indicate a drawing order (z-order) of these primitive objects when constructing the object from the primitive object.

While the data 60, 70, 80 respectively define the representations of the corresponding objects directly in terms of primitive objects, the information on one or several representations of an object may also include an identifier for one or several other objects. Thereby, a hierarchy of objects may be defined. When the information on one or several representations of an object includes identifiers for one or several other objects, identifiers for one or several primitive objects may additionally be included in the information on representations of the object.

For illustration, in the data archive 40, the data 50 include a single array line 52 having data 53, which may be an identifier for a primitive object, and data 54-56 which store identifiers for the data 60, 70 and 80, respectively. While the data 50 include only one array line 52, plural different representations of the corresponding object may still be supported, because the data 60, 70 and 80, to which the identifiers in the array fields 54, 55 and 56 refer, include information on plural representations for the respective objects from which the object corresponding to the data 50 is constructed.

Figs. 5A and 5B show schematic illustrations of graphics 91, 111 output via an optical output device at different times. The exemplary graphics 91, 111 may be displayed, for example, on the output device 6 of the apparatus 1 of Fig. 1. Several graphical objects are included in the graphics 91, 111, namely a toolbar and several buttons. The state of some of the graphical objects is changed in the graphics 111 of Fig. 5B as compared to the graphics 91 of Fig. 5A. The change in state may be triggered, for example, in that a pointer arrow displayed on the optical output device is moved from a position 103 of Fig. 5A to a position 118 of Fig. 5B in response to a user input.

Referring to Fig. 5A, in the graphics 91, a toolbar 92 is displayed which has a frame and three buttons 93, 94, 95 in its interior. The toolbar 92 and the three buttons 93, 94, 95 represent objects output via the optical output device. Each of the buttons 93, 94, 95 is constructed from several graphical primitive objects, while the toolbar 92 is constructed from a graphical primitive object, namely the frame surrounding the buttons, and the three buttons 93, 94, 95. The button 93 is constructed from a filled rectangle 96 and a triangular graphics 97 superimposed on the rectangle 96. The button 94 constructed from an empty rectangle 98 and another graphics 99 superimposed on the rectangle. The button 95 constructed from an empty rectangle 100 and a square 101 and circle 102 superimposed on the rectangle.

Referring to Fig. 5B, in the graphics 111, a toolbar 112 is displayed which has a frame and three buttons 113, 114, 115 in its interior, which correspond in position to the buttons 93, 94, 95 in the graphics 91 of Fig. 5A. The toolbar 112 and the three buttons 113, 114, 115 represent objects output via the optical output device. Each of the buttons 113, 114, 115 is constructed from several graphical primitive objects, while the toolbar 112 is constructed from a graphical primitive object and the three buttons 113, 114, 115. While the button 114 in the graphics 111 is identical to the button 94 in the graphics 91, buttons 113 and 115 differ in appearance from the corresponding buttons 93 and 95, respectively, in the graphics 91, i.e., the state of the buttons 113 and 115 have changed due to movement of the pointer arrow from position 103 in Fig. 5A to position 118 in Fig. 5B. More specifically, button 113 is constructed from a filled rectangle 116 having a filling pattern different from the one of the filled rectangle 96, and a triangular graphics 117 identical to the triangular graphics 97. Button 115 is constructed from an empty rectangle and a superimposed square, but does no longer include the circle 102 as the corresponding button state 95 of Fig. 5A.

Referring back to Fig. 4 for further illustration of the data archive 40, the data 50 may correspond to the toolbar 92, 112, with the data field 53 specifying the rectangular bounding box of the toolbar 92 and the data fields 54, 55 and 56 including identifiers for the data 60, 70 and 80 which define various representations of the buttons 93, 94 and 95, or 113, 114 and 115, respectively. For further illustration, the states of the buttons 93, 94, 95 shown in Fig. 5A are assumed to correspond to the information in the first array lines 62, 72 and 82 in the data 60, 70 and 80, respectively. Then, the data field 66 includes an identifier for the filled rectangle 96 and the data field 67 includes an identifier for the triangular graphics 97. Similarly, the primitive objects from which the buttons 94 and 95 are constructed in the state illustrated in Fig. 5A are represented by the data fields in the array lines 72 and 82, respectively, while the primitive objects from which the buttons 113, 114 and 115 are constructed in the state of Fig. 5B are represented by the data fields in the array lines 63, 73, and 83, respectively.

Referring back to Fig. 3 for further explanation of the method 30, when the toolbar and buttons of Fig. 5 are to be output, it is first determined based on the position of the pointer arrow whether, for example, the topmost button in the toolbar is to be output as button 93 in the state as shown in Fig. 5A, or as button 113 in the state as shown in Fig. 5B. Depending on which of the two states of the button is to be output, information on the graphical primitive objects is retrieved either from the array line 62 or the array line 63 of the data archive 40 of Fig. 4. By generating instances of the primitive objects, either the rectangle 96 and the graphics 97 or the rectangle 116 and the graphics 117 are output, so that the button is output in the state of either Fig. 5A or Fig. 5B, depending on the position of the pointer arrow.

An object may be output again in a new state when it is determined that there has been a change in the state of the object.

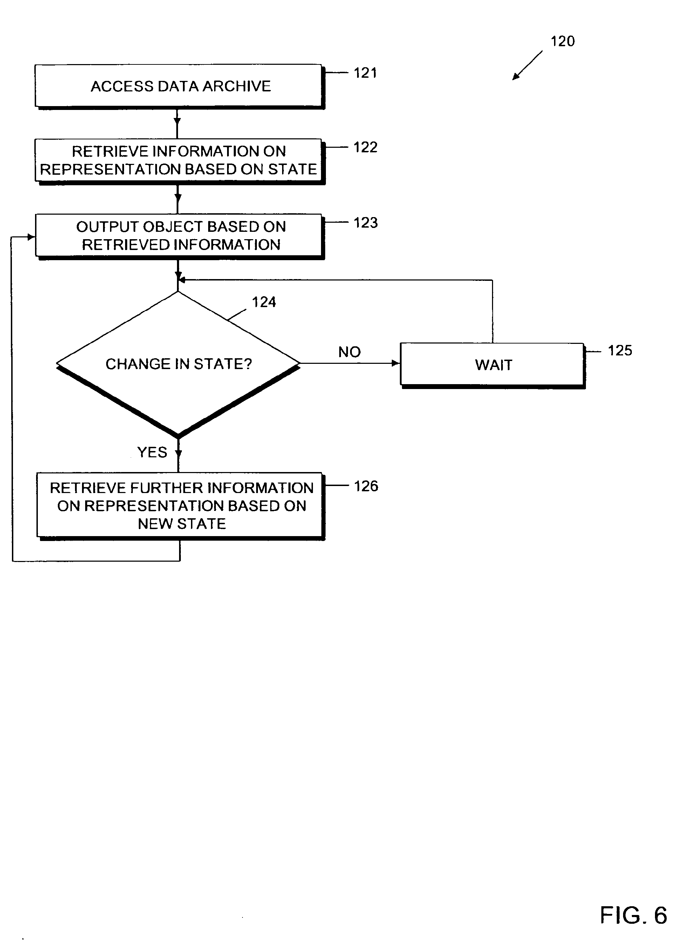

Fig. 6 is a flow diagram representation of method steps 120 performed in a method of outputting an object, in which further information may be retrieved from a data archive when the object is to be output in a new state. The method may be performed by the apparatus 1 of Fig. 1.

After determining an initial state of an object, as described with reference to the determining 31 in Fig. 3, at 121 the data archive is accessed, at 122 information on a representation of the object in terms of at least one primitive object is retrieved from the data archive, and at 123 the object is output in the initial state by outputting the at least one primitive object specified by the retrieved information, as has been explained with reference to the accessing 32, retrieving 33 and outputting 34 in Fig. 3.

At 124 it is determined whether there is a change in the state of the object. Determining a change in the state of the object may involve monitoring a triggering event. For illustration rather than limitation, the state of the object may change based on an internal state of the apparatus that controls or includes the human-machine interface and/or based on a user input. When no change in the state is detected at 124, the monitoring for a change in the state of the object is continued. Monitoring for a change in the state of the object does not have to be performed continuously, but may also be performed intermittently, as schematically indicated by wait block 125.

If a change in the state of the object is determined to occur at 124, the method proceeds to 126. At 126, further information on a representation of the object that corresponds to the new state of the object is retrieved from the data archive. When required, the data archive may be accessed again to retrieve the further information. The method then returns to 123, where the object is output in the new state based on the further information retrieved at 126. When the human-machine interface has an optical output device and the objects are graphical objects, when the object is displayed in the new state subsequent to retrieving the further information at 123, the object may be displayed at essentially the same position at which it has been displayed in its initial state.

Referring back to Figs. 4 and Fig. 5, the method 120 of Fig. 6 will be illustrated further. Assuming, for illustration rather than limitation, that the graphics 91 of Fig. 5A shows the toolbar and buttons output on the optical output device in an initial state, at 121 the data archive 40 of Fig. 4 is accessed, at 122 the information on the representation of the toolbar and buttons corresponding to the initial state is retrieved from array lines 52, 62, 72 and 82, respectively, and the toolbar and buttons are displayed on the optical output device in the states 92, 93, 94 and 95, respectively, illustrated in Fig. 5A. As long as the pointer arrow remains in the position 103 of Fig. 5A, no change in the state of the objects is determined at 124. However, when the pointer arrow moves to the position 118 of Fig. 5B, the state of the buttons 93 and 95 is determined to change at 124. At 126, further information on a further representation of these buttons is then retrieved from the array lines 63 and 83 of the data archive, respectively. At 123, the buttons 113 and 115 are output in the new state illustrated in Fig. 5B.

The information on a representation of an object may define the representation of the object in a given state not only by directly specifying one or several primitive object(s), but additionally or alternatively also in terms of identifiers for other objects. In other words, a hierarchy of objects may be defined in which an object is defined in terms of one or several second object(s). In this case, both the information on the representation of the object and the information on the representation of the second object(s) may be retrieved from the data archive in order to output the object, as will be explained in more detail next.

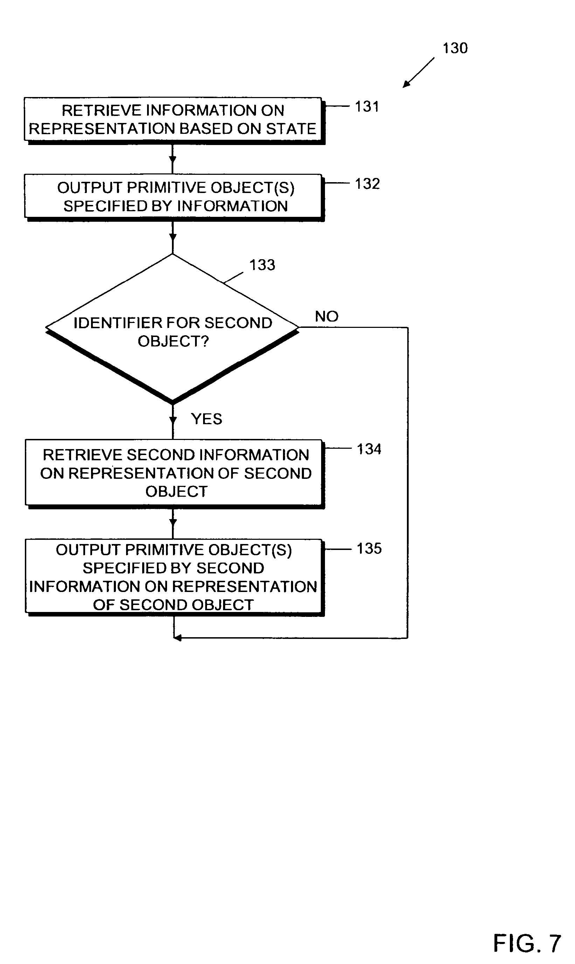

Fig. 7 is a flow diagram representation of method steps 130 that may be implemented in the method of outputting an object of Fig. 3 or of Fig. 6. The method steps 130 may be performed by the apparatus 1 of Fig. 1.

At 131, information on a representation of an object that is to be output is retrieved based on a state of the object that is determined, for example, as described for the determining 31 of Fig. 3 above. At 132, when the retrieved information on the representation of the object directly specifies one or several primitive object(s), the specified primitive object(s) are output. When the retrieved information on the representation of the object does not directly specify a primitive object, no output is generated at 132. At 133, it is determined whether the retrieved information on the representation of the object includes an identifier for a second object. If the information on the representation of the object does not include an identifier for a second object, the method steps 130 terminate. If the information on the representation of the object includes an identifier for a second object, at 134, second information on the representation of the second object is retrieved from the data archive. The retrieving of the second information relating to the second object at 134 may be based on the determined state of the object. At 135, the one or several primitive object(s) specified by the second information is or are output. Thereby, outputting of the object in the desired state is completed, and the method steps 130 terminate.

When the information on the representation of the object retrieved at 131 includes identifiers for several second object, at 134 and 135, the corresponding second information on the representations of all specified second objects is retrieved and the primitive objects corresponding to all specified second objects are output.

Further, the second information on the representation of the second object may include an identifier for yet another, third, object. In this case, the outputting of the primitive object(s) at 135 includes retrieving information on a representation of the third object from the data archive. In this manner, the object is output in the desired state by repeatedly accessing the data archive to retrieve information relating to other objects, when a hierarchy of objects having more than two hierarchy stages is defined.

Further, the order of steps indicated in Fig. 7 is merely illustrative, and the retrieving second information and outputting primitive objects at 134 and 135 may also be performed prior to outputting the primitive objects at 132. For example, the outputting of primitive objects at 132 and of primitive objects specified by the second information at 135 may be performed in the order of the respective identifiers in the information retrieved at 131.

Referring back to Figs. 4 and Fig. 5, the method steps 130 of Fig. 7 will be illustrated further. The data 50 in the data archive 40 of Fig. 4 defines a representation of the toolbar 92 of Fig. 5A in terms of one primitive object specified in the data field 53 and identifiers for other objects, namely the buttons 93, 94 and 95, in the data fields 54, 55 and 56, respectively. In order to output the toolbar 92, at 131, the data 50 are retrieved. At 132, the toolbar bounding box specified by the data field 53 is output. At 133, it is determined that the data 50 defines the representation of the toolbar in terms of other objects. At 134, the information on the representation of the buttons 93, 94 and 95 is retrieved from the array lines 62, 72 and 82, respectively. At 135, the primitive objects 96-102 specified by the array lines 62, 72 and 82 are output to generate the buttons 93, 94 and 95 in the state of Fig. 5A. The array line of the data 60, 70 and 80, from which information on the representation of the buttons 93, 94 and 95 is to be retrieved, is determined based on the state of the toolbar that has previously been determined. For example, when the pointer arrow is in the position 118 of Fig. 5B, at 134, the information on the representation of the buttons is retrieved from the array lines 63, 72 and 83, respectively, so that the buttons are displayed in the states 113, 114 and 115 of Fig. 5B.

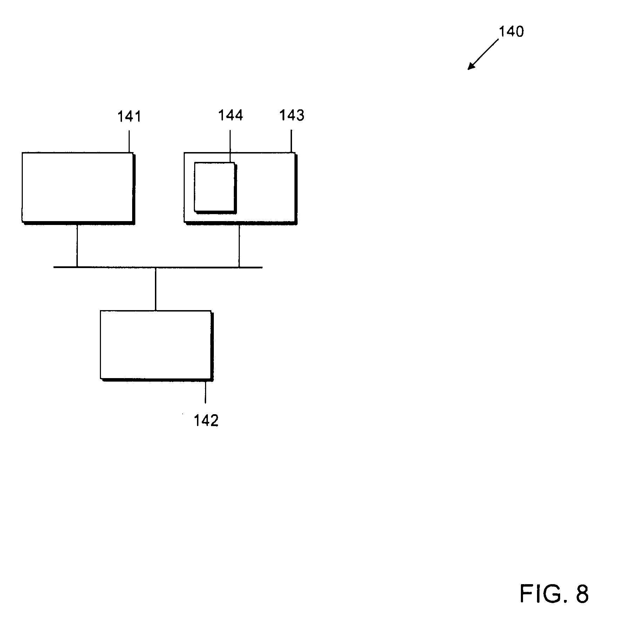

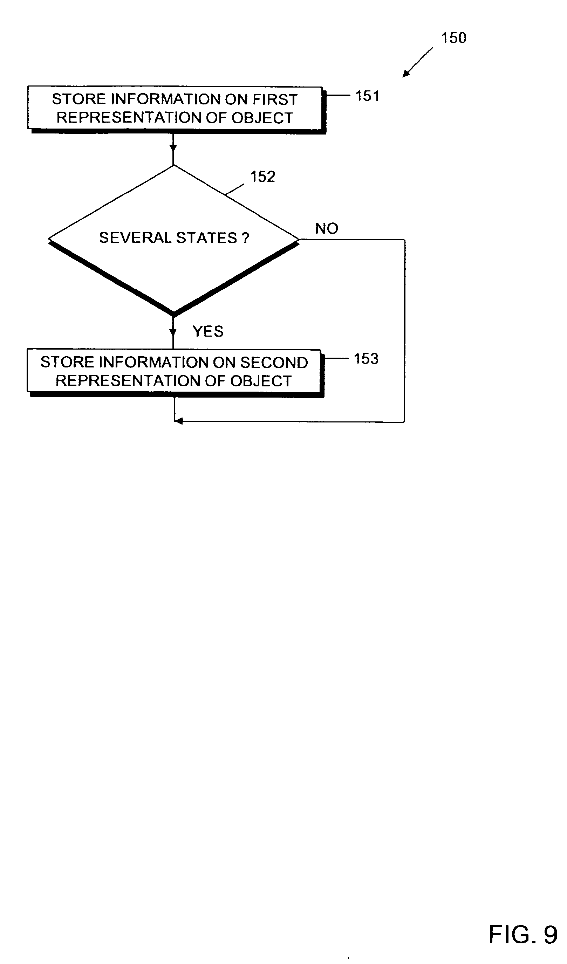

With reference to Figs. 8 and 9, an apparatus and method will be described that allow the data archive for a human-machine interface utilized in any one of the methods described above to be generated.

Fig. 8 is a schematic block diagram representation of a data processing apparatus 140 that allows a data archive to be generated. The apparatus 140 comprises an input device 141, a processor 142 and a storage device 143 in which the generated data archive 144 is stored.

The processor 142 receives information on a first representation of an object. This information may be provided as a user input received at the input device 141. In one exemplary embodiment, the user input specifies one or several primitive objects and/or one or several other objects from which the first representation of the object, corresponding to a first state, is constructed, as well as their drawing order. The information on the first representation of the object is stored in the data archive 144. In one exemplary embodiment, the information on the first representation may be stored in the form of an array line, as schematically indicated for array lines 62, 72 and 82 in the data archive 40 of Fig. 4.

The processor 142 determines whether an additional, second representation for the object that corresponds to a different, second state of the object is to be supported. This determination may be made based on a user input received at the input device 141. In one exemplary embodiment, the user input specifies the number of different representations, and thus the number of different states of the object, that are to be supported in the human-machine interface.

When a second representation for the object is to be supported, the processor 142 receives information on the second representation of the object. This information may be provided as a user input received at the input device 141, for example by the user specifying one or several primitive objects and/or one or several other objects, from which the second representation of the object is constructed, as well as their drawing order. The information on the second representation of the object is stored in the data archive 144. In one exemplary embodiment, the information on the second representation may be stored in the form of an array line, as schematically indicated for array lines 63, 64, 73, 83 and 84 in the data archive 40 of Fig. 4. The information on the first and second representations may be stored so as to form the array-like structures schematically illustrated in the data archive 40 of Fig. 4. This may be achieved by adding empty data fields in the array lines, where required, to account for a smaller number of primitive objects from which the object is constructed in one of the representations.

Fig. 9 is a flow diagram representation of a method 150 in which data corresponding to an object to be output via a human-machine interface are stored in a digital data archive. The method 150 may be performed by the data processing apparatus 140 of Fig. 8.

At 151, information on a first representation of the object is stored in the digital data archive. The information on the first representation defines the representation in terms of at least one primitive object. At 152, it is determined whether several representations corresponding to several states of the object are to be supported. When several states are to be supported for the object, at 153, information on a second representation of the object is stored in the data archive. The information on the second representation defines the representation in terms of at least one primitive object.

In the method 150 of Fig. 9, the storing of information on further additional representations may be repeated several times, as appropriate depending on the total number of representations to be supported for an object. For example, when three or more different representations corresponding to three or more different states of the object are to be supported, information on the third, fourth etc. representations are also stored in the digital data archive.

Further, while in the method 150 the determination at 152 of whether several states are to be supported is illustrated as being made after the information on the first representation has been stored in the data archive, the order of the steps of the method 150 may be modified. For example, in one embodiment, a number of different representations that are to be supported may be input first, then information on each one of the different representations may be collected by a processor, and only subsequently the information on all different representations is stored in the data archive.

Various modifications of the methods and devices illustrated in the drawings and explained herein may be implemented in other embodiments. For example, while specific numbers of different objects and specific numbers of different representations for each of the objects have been illustrated and described with reference to some embodiments, the number of different objects and the number of different representations of each object stored in a digital data archive may be configured as appropriate for the specific required application. While in some of the embodiments described herein a change in a state of an object is triggered by a user action, such a change in the state of the object may also be triggered by any other event, for example based on an internal state of an apparatus that includes, or is coupled to, the human-machine interface.

While it is expected that embodiments of the invention may be utilized in a navigation device, the invention is not limited to this specific field of application, but may be applied to any electronic apparatus or device in which data is output to a user. Further, while some embodiments have been described with reference to outputting graphical objects via an optical output device, the various embodiments are equally applicable to apparatuses in which acoustic, tactile or other feedback, or a combination of optical, acoustic and/or tactile feedback is provided to a user.

## Claims

1. A method of outputting an object via a human-machine interface (2), comprising
determining a state of said object (92-95, 112-115) to be output,
accessing a digital data archive (8; 18; 40) storing information (52, 62-64, 72, 73, 82-84) on a plurality of different representations of said object (92-95, 112-115), information (52, 62-64, 72, 73, 82-84) on a representation of said plurality of representations of said object (92-95, 112-115) respectively specifying said representation in terms of at least one primitive object (96-102, 116, 117),
retrieving information (52, 62, 72, 82) on a representation of said plurality of representations of said object (92-95, 112-115) based on said determined state, and
outputting said object (92-95, 112-115) based on said retrieved information (52, 62, 72, 82) on said representation.

2. The method according to claim 1, comprising
determining that a further state of said object (113, 115) is to be output, retrieving further information (63, 83) on a further representation of said plurality of representations of said object (113, 115) based on said determined further state, and
outputting said object (113, 115) based on said retrieved further information (63, 83) on said further representation.

3. The method according to claim 2, comprising
monitoring a triggering event to determine that said further state of said object (113, 115) is to be output.

4. The method according to any one of the preceding claims, wherein said triggering event comprises a user action.

5. The method according to any one of the preceding claims,
wherein said outputting comprises outputting said at least one primitive object (96-102, 116, 117) specified by said retrieved information (52, 62, 72, 82) on said representation.

6. The method according to any one of the preceding claims,
wherein said retrieved information (52) on said representation includes an identifier (54-56) for a second object (93-95, 113-115),
the method comprising retrieving second information (62, 63, 72, 82, 83) on a representation of said second object (93-95, 113-115) from said digital data archive (8; 18; 40) based on said identifier (54-56),
wherein said outputting said object (92, 112) comprises outputting said second object (93-95, 113-115) based on said retrieved second information (62, 63, 72, 82, 83).

7. The method according to claim 6,
wherein said retrieving said second information (62, 63, 72, 82, 83) is based on said determined state.

8. The method according to any one of the preceding claims,
wherein said human-machine interface (2) comprises an optical output device (6; 91, 111) and said object is a graphical object (92-95, 112-115).

9. The method according to claim 8, comprising
determining that a further state of said object (113, 115) is to be output, retrieving further information (63, 83) on a further representation of said plurality of representations of said object (113, 115) based on said determined further state, and
outputting said object (113, 115) based on said retrieved further information (63, 83) on said further representation at a position of the optical output device (6; 91, 111) that essentially corresponds to a position at which said object (93, 95) has been output based on said information (62, 82) on said representation.

10. The method according to any one of the preceding claims,
wherein said plurality of different representations is configured to correspond in number to a number of states of said object (92-95, 112-115) in said human-machine interface (2).

11. The method according to any one of the preceding claims,
wherein said state of said object (92-95, 112-115) is selected from a group comprising states indicative of a manipulation of elements (92-95, 103, 112-115, 118) output via said human-machine interface (2), states indicative of data processing by a processor (4; 14) coupled to said human-machine interface (2), and states indicative of data processed by said processor (4; 14).

12. The method according to any one of the preceding claims,
wherein said at least one primitive object (96-102, 116, 117) is selected from a group comprising an alphanumerical string, a bitmap image, a vector drawing, a rectangle, a polygon, or an ellipse.

13. Data storage device,
having stored thereon instructions which, when executed by a processor (4; 14) of a data processing apparatus (1; 11), direct the processor (4; 14) to perform the method according to any one of the preceding claims.

14. Data processing apparatus, comprising
a human-machine interface (2),
a digital data archive (8; 18; 40) storing information (52, 62-64, 72, 73, 82-84) on a plurality of representations of an object (92-95, 112-115) to be output via said human-machine interface (2), information (52, 62-64, 72, 73, 82-84) on a representation of said plurality of representations of said object (92-95, 112-115) respectively specifying said representation in terms of at least one primitive object (96-102, 116, 117), and
a processor (4; 14) configured to determine a state of said object (92-95, 112-115), wherein said processor (4; 14) is coupled to said digital data archive (8; 18; 40) to retrieve information (52, 62, 72, 82) on a representation of said plurality of representations of said object (92-95, 112-115) based on said determined state, and wherein said processor (4; 14) is coupled to said human-machine interface (2) to output said object (92-95, 112-115) via said human-machine interface (2) based on said retrieved information (52, 62, 72, 82).

15. Data processing apparatus according to claim 14,
wherein said processor (4; 14) is configured to perform the method according to any one of claims 1-12.

16. Data processing apparatus according to claim 14 or claim 15,
wherein said data processing apparatus (1) is a navigation device.

17. Data processing method, in which data corresponding to an object to be output via a human-machine interface (2) are stored in a digital data archive (8; 18; 40; 144), the method comprising
determining whether plural representations for said object (92-95, 112-115) are to be supported, said plural representations for said object (92-95, 112-115) corresponding to different states of said object (92-95, 112-115) to be output via said human-machine interface (2),
storing in said data archive (8; 18; 40; 144) information (52, 62, 72, 82) on a first representation of said object in terms of at least one primitive object (96-102, 116, 117), and,
based on said determining, storing in said data archive (8; 18; 40; 144) information (63, 64, 73, 83, 84) on a second representation of said object in terms of at least one primitive object (96-102, 116, 117).

18. The method according to claim 17 ,
wherein said determining is based on a user input.

19. The method according to claim 17 or 18,
wherein said information (52, 62, 72, 82) on said first representation of said object and/or said information (63, 64, 73, 83, 84) on said second representation of said object stored in said data archive (8; 18; 40; 144) include an identifier (54-56) for a further object (93-95, 113-115).

20. The method according to any one of claims 17-19,
wherein said data archive (8; 18; 40; 144) is a data archive for use in the method according to any one of claims 1-12.
